(19) Europäisches Patentamt / European Patent Office / Office européen des brevets

(11) **EP 1 985 828 B1**

(12) **FASCICULE DE BREVET EUROPEEN**

(45) Date de publication et mention
de la délivrance du brevet:
**01.06.2016 Bulletin 2016/22**

(51) Int Cl.:
*F02D 31/00* (2006.01)    *F02D 41/10* (2006.01)
*F02D 41/16* (2006.01)

(21) Numéro de dépôt: **08154141.9**

(22) Date de dépôt: **07.04.2008**

(54) **Procédé et dispositif de régulation du régime d'un moteur équipé d'une commande en couple**

Verfahren und Vorrichtung zur Betriebsregulierung eines Motors, der mit einer Drehmomentsteuerung ausgestattet ist

Method and device for regulating the running speed of an engine equipped with torque control

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.04.2007 FR 0754695**

(43) Date de publication de la demande:
**29.10.2008 Bulletin 2008/44**

(73) Titulaire: **Peugeot Citroën Automobiles SA**
**78943 Vélizy-Villacoublay Cedex (FR)**

(72) Inventeurs:
• **Saliou, Sébastien**
  **93320, Châtillon (FR)**
• **Maurel, Stéphane**
  **92130, Issy-les- Moulineaux (FR)**

(74) Mandataire: **Ménès, Catherine**
**Peugeot Citroën Automobiles SA**
**PI (LG081)**
**18, rue des Fauvelles**
**92250 La Garenne-Colombes (FR)**

(56) Documents cités:
**DE-A1- 3 618 844**    **FR-A- 2 704 024**
**FR-A- 2 891 587**    **US-A- 5 040 119**
**US-A- 6 112 719**    **US-B1- 6 347 680**

**Description**

La présente invention concerne un procédé de régulation du régime d'un moteur équipé d'une commande en couple. Elle concerne également un dispositif pour la mise en oeuvre d'un tel procédé de régulation. Elle s'applique aux moteurs, thermiques ou non, dont on souhaite asservir le régime de l'arbre moteur et dont la grandeur de commande est appliquée en couple.

La présente invention s'applique particulièrement lorsque le moteur, commandé en couple, doit être piloté en régime. Elle est particulièrement adaptée à la régulation du régime d'un moteur pendant les phases transitoires (suivi d'une, trajectoire de référence). Elle est également adaptée à la régulation du régime d'un moteur autour d'une valeur constante.

A titre d'exemple, le moteur est piloté en régime dans les « situations » suivantes :

- la phase de retour au ralenti et le ralenti,
- la phase de glissement de l'embrayage, qui fait suite à un changement de rapport de vitesse avec une boîte de vitesses mécanique pilotée - dite BVMP -, c'est-à-dire une boîte de vitesses à gestion électronique de l'embrayage et du passage des rapports.

On connaît déjà des systèmes de régulation d'un moteur commandé en couple. On connaît, par exemple, selon le document US 6,039,028, un système pour réduire des pulsations dans la vitesse de rotation d'un moteur générant un couple de rotation. Dans ce systèmes, du couple appliqué par une source supplémentaire de couple comporte une partie ou composant dérivé d'une régulation asservie de vitesse de moteur et un autre composant en forme d'instruction de régulation anticipée. Le composant de régulation anticipée calculé à l'avance les composants oscillants dans le couple généré par le moteur.

Un autre example est donné par US 6112719.

De façon plus générale, les systèmes de régulation connus de l'art antérieur définissent une trajectoire de consigne de la valeur du régime en fonction du temps, et des moyens de régulation cherchent à suivre cette trajectoire de consigne.

Un inconvénient important de ces solutions techniques connues réside dans le fait que les limitations en couple, principalement la valeur minimale du couple, et en dynamique ne permettent pas, le plus souvent, de suivre parfaitement la trajectoire de consigne. Cela peut porter atteinte à la qualité du fonctionnement du moteur dans les phases transitoires :

- par un dépassement du régime moteur au moment où le régime rejoint sa trajectoire de consigne, dans le cas d'une situation de retour au ralenti,
- par des oscillations au moment de « l'accostage » des régimes moteur et arbre primaire, dans le cas d'une situation de changement de rapport avec une boite de vitesses mécanique pilotée, la qualité de « l'accostage » étant directement liée au respect de l'angle d'incidence des régimes moteur et arbre primaire au moment de leur croisement.

Le but de la présente invention est de fournir un procédé de régulation du régime d'un moteur commandé en couple lorsque ce moteur doit être piloté en régime, qui permette de remédier aux inconvénients mentionnés ci-dessus, en gérant mieux la trajectoire du régime moteur, en particulier dans les phases transitoires des « situations de vie » évoquées ci-dessus.

Un autre but de la présente invention est de fournir un tel procédé qui, dans le cas d'une phase de glissement de l'embrayage suite à un changement de rapport avec une BVMP, assure un bon « ressenti » de ce changement de rapport au conducteur, et permette de maîtriser l'amplitude du créneau de couple moteur en anticipant le collage de l'embrayage.

Un autre but de la présente invention est de fournir un tel procédé, qui prennent parfaitement en compte les limitations liées au moteur thermique (saturation en couple minimal et maximal, dynamique, etc.).

C'est également un but de la présente invention de fournir un dispositif pour la mise en oeuvre d'un tel procédé, qui soit de conception simple, qui soit fiable et économique.

Pour parvenir à ces buts, la présente invention propose une nouveau procédé de régulation du régime d'un moteur commandé en couple lorsque ce moteur doit être piloté en régime definit par la revendication 1, qui comporte les étapes suivantes :

- on génère une consigne de dérivée du régime moteur, et
- on régule cette consigne de dérivée de régime moteur en prenant en compte les limitations en couple et en dynamique du moteur.

On génère ladite consigne de dérivée du régime moteur en définissant une trajectoire de référence pour la dérivée de l'écart entre le régime moteur et le régime cible,

On régule ensuite ladite consigne de dérivée de régime moteur selon les phases suivantes :

- on calcule le couple moteur de référence à appliquer au moteur pour suivre la consigne de dérivée de régime moteur, en .prenant en compte les éventuels consommateurs de couple et les saturations du générateur de couple,
- à partir du couple moteur de référence, on calcule une référence de dérivée de régime moteur, et
- on régule la mesure de dérivée du régime moteur à la consigne définie par ladite référence de dérivée de régime moteur.

Selon un mode préféré de réalisation de l'invention, la trajectoire de référence est une trajectoire de type « exponentielle sécante » définie par l'équation suivante :

$$\frac{d\Delta\omega(t)}{dt} = \Delta\dot{\omega}(t) = -\frac{1}{\tau}\Delta\omega(t) - \text{signe}(\Delta\omega(t))|\Delta\dot{\omega}_1|$$

dans laquelle :

$$\Delta\omega(t) = \omega_{cible}(t) - \omega_{mot}(t) ,$$

$\omega_{mot}(t)$ est le régime de l'arbre moteur à l'instant $t$,
$\omega_{cible}(t)$ le régime cible (consigne finale) à l'instant $t$,
$\tau$ est une constante de temps de la trajectoire, et
$\Delta\dot{\omega}_1$ est la pente de raccordement.

La consigne de couple à commander au moteur résulte de la sommation d'un terme de couple moteur de référence et d'un terme dit de correction de couple moteur obtenu lorsqu'on régule la mesure de dérivée du régime moteur à la consigne définie par la référence de dérivée de régime moteur.
La présente invention fournit également un dispositif de régulation du régime d'un moteur commandé en couple lorsque ce moteur doit être piloté en régime, pour la mise en oeuvre du procédé décrit ci-dessus dans ses grandes lignes. Ce dispositif comporte un module de génération d'une consigne de dérivée du régime moteur, et une structure de régulation anticipée et asservie - ou système de contrôle « feedforward/feedback » - qui prend en compte les limitations en couple et en dynamique du moteur.
La structure de régulation anticipée et asservie comporte un module de régulation anticipée qui calcule une référence de dérivée de régime moteur qui prend en compte la dynamique du moteur et un module de régulation asservie qui régule la mesure de dérivée du régime moteur à la consigne définie par la référence de dérivée.
De préférence également, le module de régulation anticipée comporte un filtre qui intègre un retard pur et un filtre du premier ordre, de façon à prendre en compte la dynamique du moteur.
Il est prévu, de préférence, un système d'anti-saturation, intégré au module de régulation asservie, afin de gérer au mieux la saturation de la commande
D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :

- la figure 1 illustre l'évolution du régime moteur d'un véhicule en fonction du temps dans une situation de retour au ralenti, selon un procédé de l'art..antérieur,
- la figures 2 illustre l'évolution du régime moteur d'un véhicule en fonction du temps dans une situation de glissement de l'embrayage suite à un changement de rapport de vitesse, également selon un procédé de l'art antérieur,
- la figure 3 représente une trajectoire dite « exponentielle sécante » utilisée dans la définition d'une trajectoire de référence, conformément au procédé de régulation de la présente invention,
- les figures 4 et 5 illustrent le calibrage de la trajectoire exponentielle sécante,
- la figure 6 est un schéma d'organisation de la structure de régulation anticipée et asservie, selon la présente invention,
- la figure 7 représente les caractéristiques du filtre utilisé dans le calcul de la référence de dérivée de régime moteur,
- les figures 8 et 9 illustrent la comparaison entre la solution de la présente invention et la solution conventionnelle de l'art antérieur dans une situation de glissement de l'embrayage suite à un changement de rapport de vitesse, et

- la figure 10 illustré la comparaison entre la solution de la présente invention et la solution conventionnelle de l'art antérieur dans une situation de retour au ralenti.

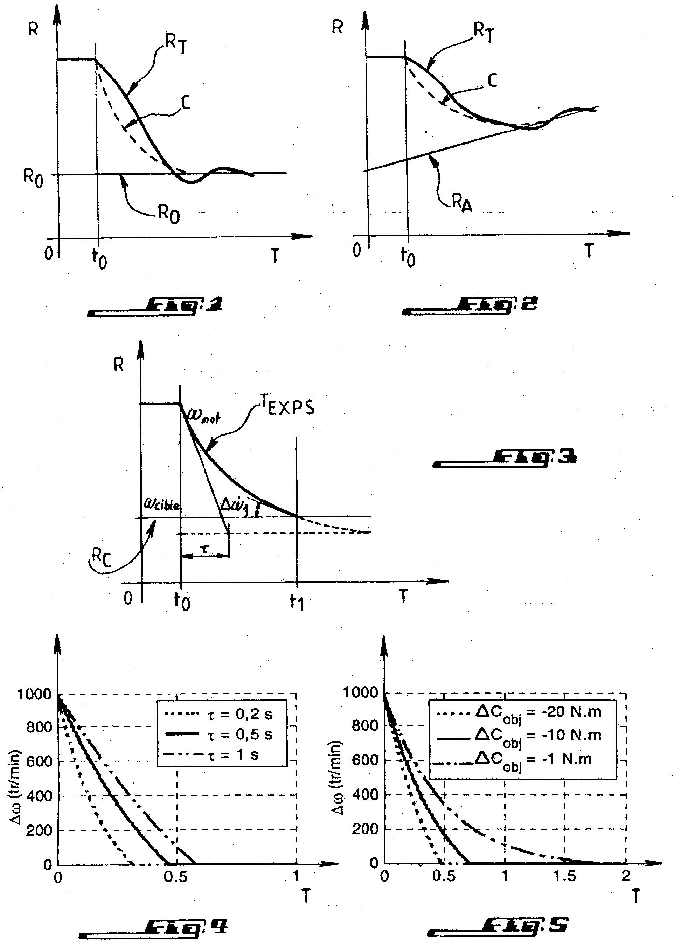

Les procédés actuels de régulation du régime d'un moteur commandé en couple définissent, généralement, une trajectoire de consigne (souvent de type exponentielle) qu'une régulation de régime chercher ensuite à _suivre. Le principal inconvénient de cette solution réside dans le fait que les limitations en couple (principalement en couple mini) et en dynamique ne permettent pas, le plus souvent, de suivre parfaitement cette consigne de régime. En référence aux figures 1 et 2, les conséquences peuvent être par exemple :

- un dépassement au moment où le régime $R_T$ rejoint sa consigne C dans le cas d'un retour au ralenti $R_0$ (voir figure 1),
- des oscillations au moment de l'accostage des régimes moteur $R_T$ et arbre $R_A$ primaire dans le cas d'un changement de rapport en BVMP (voir figure 2). La qualité de l'accostage est directement liée au respect de l'angle d'incidence des régimes moteur $R_T$ et arbre primaire $R_A$ au moment de leur croisement.

Le procédé selon la présente invention consiste à générer une consigne de dérivée de régime moteur, puis à réguler cette grandeur par une structure de régulation anticipée et asservie - dite aussi structure de contrôle « feedforward/feedback » - qui prend en compte les limitations en couple et en dynamique du moteur.
Selon une première étape du procédé de l'invention, il est défini une trajectoire de référence.
A cette fin, on définit l'écart de régime $\Delta\omega$, à l'instant t, qui est la différence entre le régime cible $\omega_{cible}$ et le régime moteur $\omega_{mot}$ :

$$\Delta\omega(t) = \omega_{cible}(t) - \omega_{mot}(t)$$

Le choix du mode de calcul de la dérivée de l'écart de régime ainsi défini permet de définir le type de la trajectoire de régime. La fonction qui définit la dérivée de l'écart de régime peut prendre en compte toutes les grandeurs que le concepteur du système de régulation peut juger intéressantes pour définir la trajectoire :

$$\frac{d\Delta\omega(t)}{dt} = \Delta\dot{\omega}(t) = f(\Delta\omega(t), \omega_{mot}(t), t, ...)$$

A titre d'exemple, on propose plusieurs équations et le type de trajectoire associée à chacune :

$\Delta\dot{\omega}(t) = Constante \rightarrow$ trajectoire en rampe,
$\Delta\dot{\omega}(t) = -\Delta\omega(t)/\tau \rightarrow$ trajectoire exponentielle,
$\Delta\dot{\omega}(t) = -\Delta\omega(t)/\tau + Constante \rightarrow$ trajectoire exponentielle sécante.

Avantageusement, on utilise la trajectoire exponentielle sécante définie par l'équation différentielle :

$$\frac{d\Delta\omega(t)}{dt} = \Delta\dot{\omega}(t) = -\frac{1}{\tau}\Delta\omega(t) - \text{signe}(\Delta\omega(t))|\Delta\dot{\omega}_1|$$

dans laquelle :

$\tau$ est une constante de temps de la trajectoire (paramètre constant qui peut être calibré), et
$\Delta\dot{\omega}_1$ est la pente de raccordement (paramètre constant qui peut être calibré), c'est-à-dire l'objectif de dérivée de l'écart de régime à l'instant $t_1$ où le régime moteur rejoint sa consigne ($\Delta\omega(t_1)=0$).

La figure 3 représente cette trajectoire dite « exponentielles sécante », référencée $T_{EXPS}$, dans laquelle les paramètres $\tau$ et $\Delta\dot{\omega}_1$ permettent de calibrer la trajectoire exponentielle. $R_C$ est le régime cible.
Les figures 4 et 5 permettent d'illustrer ce calibrage :

- sur la figure 4 : variations de $\tau$ pour

4

$$\Delta C_{obj} = J_{mot} \Delta \dot{\omega}_1 = -10 \, \text{N.m}$$

- sur la figure 5 : variations de $\Delta C_{obj}$ pour $\tau = 0{,}5s$

Après avoir ainsi défini une trajectoire de référence, selon le procédé de l'invention, on cherche à respecter au mieux cette consigne de dérivée de régime tout en prenant en compte les limitations liées au moteur en terme de niveau de couple (saturations mini et. maxi) et en terme de dynamique. L'objectif est, notamment, de maîtriser au mieux la dérivée de l'écart de régime au moment où cet écart s'annule.

Selon le principe de l'invention, on régule la dérivée du régime moteur et on se base sur les équations physiques du système pour pouvoir prendre en compte ses limitations.

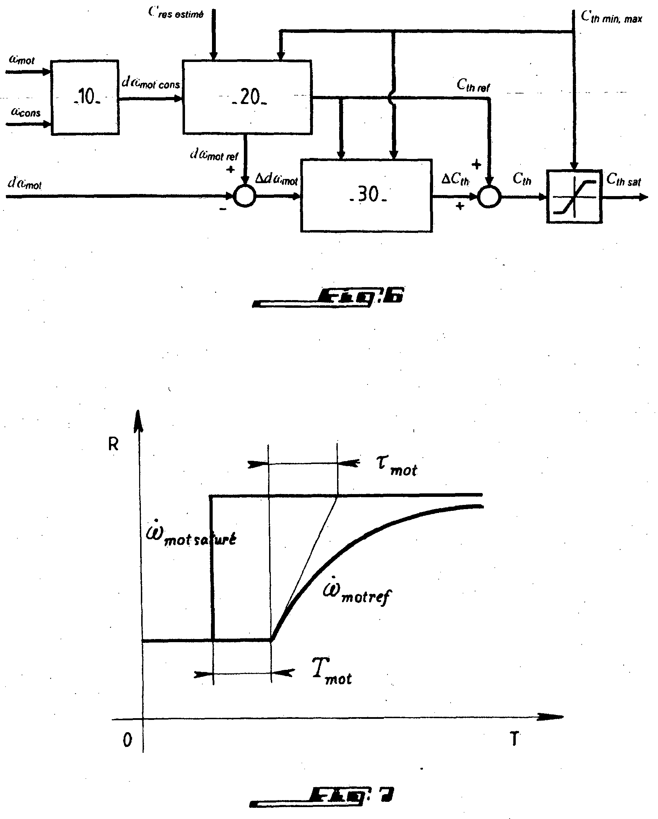

En référence au dessin de la figure 6, la structure globale du système de régulation présente un module de régulation dite « anticipée » - ou « feedforward » -, référencé 20, et un module de régulation dite « asservie » - ou « feedback » -, référencé 30. Les fonctions de ces deux modules 20, 30 sont exposées ci-dessous avec la description de la deuxième et de la troisième étape du procédé de régulation de l'invention.

La consigne de dérivée de régime moteur étant générée par le module 10, conformément aux hypothèses et calculs décrits précédemment, une deuxième étape du procédé de régulation consiste à calculer le couple moteur à appliquer pour suivre la consigne de dérivée de régime moteur définie précédemment tout en cherchant à rejeter les perturbations liées aux consommateurs de couple. On définit également une référence de dérivée de régime moteur qui doit chercher à représenter le plus fidèlement possible la mesure de dérivée de régime moteur en prenant en compte des limitations (saturations en couple mini et maxi, dynamique de la génération du couple, etc).

La détermination du couple de référence est basée sur l'équation de la dynamique appliquée à l'inertie du volant moteur :

$$J_{mot} \dot{\omega}_{mot} = C_{th} - C_{res}$$

dans laquelle :

$J_{mot}$ est l'inertie du volant moteur
$C_{th}$ est le couple fourni par le moteur
$C_{rex}$ est le couple résistant (typiquement le couple prélevé par l'embrayage)

L'équation ci-dessus permet de déterminer le couple moteur de référence non saturé nécessaire pour suivre la consigne de dérivée de régime moteur tout en rejetant les perturbations liées au couple résistant :

$$C_{th\,ref\,non\,sat}(t) = J_{mot} \dot{\omega}_{mot\,cons}(t) + C_{res\,estimé}(t)$$

équation dans laquelle :

Cres estimé($t$) est le couple résistant estimé

Ce couple de référence est saturé par les limites minimale et maximale du couple moteur :

$$C_{th\,ref}(t) = \min\left(\max\left(C_{th\,non\,sat}, C_{th\,min}\right), C_{th\,max}\right)$$

La prise en compte de ces saturations permet de calculer une référence de dérivée de régime moteur (basée sur l'équation de la dynamique) :

$$\dot{\omega}_{mot\,saturé}(t) = \frac{1}{J_{mot}}\left(C_{th\,ref}(t) - C_{res\,estimé}(t)\right)$$

On définit alors la grandeur $\dot{\omega}_{mot\,ref}$, qui est calculé à partir de $\dot{\omega}_{mot\,saturé}$ en prenant en compte la dynamique du moteur. Pour cela on peut utiliser, par exemple, un filtre qui intègre un retard pur et un filtre du premier ordre (voir

figure 7) :

$$F(s) = e^{-T_{mot}s} \frac{1}{1 + \tau_{mot}s}$$

équation dans laquelle :

$T_{mot}$ est le retard pur du générateur de couple,
$\tau_{mot}$ est la constante de temps du générateur de couple.

La troisième et derrière étape du procédé de régulation consiste à réguler la mesure de dérivée du régime moteur à la consigne définie par la référence de dérivée de régime moteur. Le module 30 qui assure cette régulation peut être un régulateur de type PID. Cette étape du procédé a pour but de rejeter les imprécisions de la commande en couple du moteur et celles de l'estimation des couples résistants. Ce régulateur 30 n'a pas nécessairement besoin d'être très rapide car la dynamique du contrôle est assurée par la régulation anticipée décrite précédemment. Un système d'anti-saturations (ou « anti wind-up ») doit être intégré au contrôle afin de gérer au mieux la saturation de la commande en couple.

Ce régulateur a pour fonction de calculer une correction en couple moteur $\Delta C_{th}$ qui vise à faire converger la mesure de dérivée de régime moteur $\dot{\omega}_{mot\,mes}$ vers la référence de dérivée de régime moteur $\dot{\omega}_{mot\,ref}$.

Le calcul de la consigne de couple à commander au moteur consiste alors à sommer le terme référence des couple moteur issu de la régulation anticipée avec le terme correction de couple moteur issu de la régulation asservie, tout en limitant la consigne avec les saturations minimale et maximale :

$$C_{th}(t) = \min\left(\max\left(C_{th\,ref}(t) + \Delta C_{th}(t), C_{th\,min}\right), C_{th\,max}\right)$$

La présente invention, telle que décrite ci-dessus, présente de nombreux avantages qui seront mieux exprimés en comparant le principe de l'invention aux solutions antérieures relativement à deux applications : la gestion du collage de l'embrayage suite à un changement de rapport de vitesse et le retour au ralenti.

En ce qui concerne l'application à la gestion du collage de l'embrayage suite à un changement de rapport (sur une BVMP), l'objectif est de faire coller l'embrayage, c'est-à-dire de faire converger le régime moteur vers le régime arbre primaire. Celui-ci devient donc le régime cible .pour le régime moteur. Dés que les deux régimes, à savoir le régime moteur et le régime arbre primaire, se croisent, l'embrayage passe en état collé et la régulation de régime est désactivée. L'objectif du contrôle de la trajectoire de régime est, dans ce cas, de limiter la durée du glissement tout en assurant un accostage qui ne génère pas d'oscillations au moment du collage de l'embrayage. Pour assurer .ce dernier point il faut limiter l'angle d'accostage des régimes. Dans cette situation, on propose d'utiliser la trajectoire exponentielle sécante décrite précédemment.

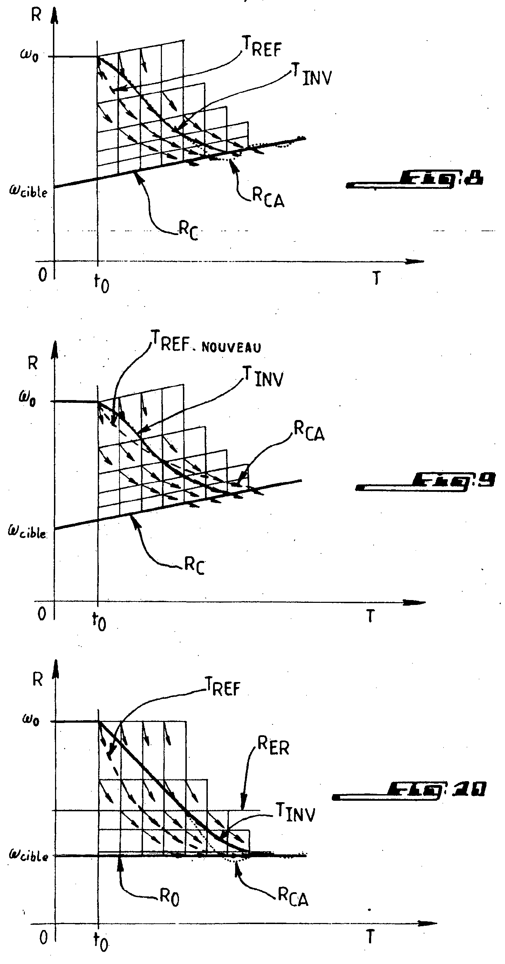

Les figures 8 et 9 permettent de comparer la solution de la présenté invention avec la solution conventionnelle généralement utilisée. La régulation est activée à l'instant $t_0$. Avec une régulation classique, on définit une trajectoire, exponentielle de référence $T_{REF}$ que l'on cherche à suivre tant que la régulation est active. Si, comme dans le cas ci-dessous, on s'éloigne de la trajectoire de référence (parce que le couple moteur minimum d'un moteur thermique est limité), le fait de chercher à rejoindre la trajectoire de référence $T_{REF}$ peut, par exemple, provoquer un accostage des régimes qui ne respecte pas l'angle défini par la trajectoire de régime. Si l'angle d'accostage dépasse une certaine valeur, la stratégie proposée par la solution technique de l'art antérieur, représentée par $R_{CA}$ ne permettra plus d'assurer un collage de l'embrayage sans générer d'àcoups perceptibles par le conducteur. Alors qu'avec la régulation qui fait l'objet de la présente invention, on ne définit pas une trajectoire de référence mais un « champ » de dérivée de régime directement fonction de l'écart par rapport au régime cible $R_C$. Dans le cas de l'exemple ci-dessous, on note que cette stratégie permet d'accrocher une nouvelle trajectoire $T_{INV}$ et ainsi d'assurer un accostage correct du régime cible $R_C$.

La solution, que proposent les procédés de régulation classiques pour assurer un accostage correct malgré tout, consiste à augmenter la constante de temps de la trajectoire de référence, ce qui permet bien d'améliorer l'accostage des régimes, mais qui présente l'inconvénient d'allonger la durée du glissement de l'embrayage et donc de réduire la durée de vie de cet organe.

L'avantage de la solution innovante basée sur la trajectoire exponentielle sécante est de proposer un paramétrage de la trajectoire par la constante de temps et la pente d'accostage, ce qui permet de moduler la durée du glissement après un changement de rapport, la durée de ce glissement influant beaucoup sur le ressenti du passage par le conducteur.

Dans une situation différente de retour au ralenti, qui correspond, typiquement, à la situation où le véhicule est à l'arrêt et la boîte de vitesses est au point mort (ou l'embrayage est ouvert), le conducteur accélère (le régime moteur augmente) puis relâche la pédale. Il faut alors que le régime moteur rejoigne le régime de ralenti. L'invention permet de gérer la trajectoire du régime moteur lors du retour au ralenti.

De plus lors d'un retour au ralenti, il est important de ne pas passer en dessous du régime cible (régime de ralenti). Le respect de la dérivée du régime moteur au moment où l'on rejoint le régime cible est donc capital. Dans, cette application de l'invention, on choisira une trajectoire de référence exponentielle non sécante (c'est-à-dire avec une pente de raccordement nulle).

La figure 10 illustre les difficultés que l'on peut rencontrer si l'on cherche à réaliser le retour au régime de ralenti $R_0$ par une régulation de régime qui cherche à suivre une trajectoire de référence $T_{REF}$ de type exponentielle définie dès que le conducteur lève le pied, c'est-à-dire dès l'instant $t_0$. La saturation en couple mini du moteur ne permet pas de suivre cette trajectoire au début du retour au ralenti, ce qui fait qu'à l'approche du régime de ralenti on ne respecte pas l'arrondi défini par la trajectoire de référence et on risque un dépassement du régime de ralenti. Pour contourner ce problème, les procédés de régulation actuels intègrent un seuil de régime d'entrée au ralenti $R_{ER}$ qui permet de n'activer le calcul de la trajectoire de référence que quand celle-ci peut être suivie.

L'avantage de l'invention consiste alors dans le fait qu'elle est capable de suivre cette même trajectoire, sans devoir paramétrer un seuil d'entrée en ralenti. En effet, la régulation est activée dès que le conducteur lève le pied de la pédale d'accélérateur. Avec le procédé de régulation de la présente invention, dont la réponse est illustrée par la courbe $T_{INV}$, le metteur au point peut calibrer l'arrondi de retour au ralenti par la constante de temps. Avec une régulation de type conventionnelle si le metteur au point modifie la constante de temps, il doit adapter la valeur du seuil de régime d'entrée en ralenti.

D'autres avantages de la présente invention sont les suivants :

- prise en compte les limitations liées au moteur thermique (saturations en couple mini et maxi, dynamique...).
- autorise un grand nombre de trajectoire de régime.
- proposition d'une trajectoire exponentielle sécante qui peut être calibrée par deux paramètres.
- rejet des perturbations liées par exemple au glissement de l'embrayage si celles-ci peuvent être estimées.
- par rapport aux solutions antérieures (régulateur de régime cherchant à suivre une trajectoire définie dés l'activation du contrôle), meilleure robustesse dans le cas où la mesure s'éloigne de la trajectoire de référence.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention definis par les revendications.

**Revendications**

1. Procédé de régulation du régime d'un moteur commandé en couple lorsque ce moteur doit être piloté en régime, **caractérisé en ce qu'**on génère une consigne de dérivée du régime moteur ($d\omega_{mot\,cons}$) en définissant une trajectoire de référence pour la dérivée de l'écart entre le régime cible ($\omega_{cible}$) et le régime moteur, et on régule cette consigne de dérivée de régime moteur ($d\omega_{mot\,cons}$), au moyen d'un module de régulation anticipée (20) et d'un module de régulation asservie (30) en prenant en compte les limitations en couple et en dynamique du moteur dès la régulation anticipée, l'étape de régulation par laquelle on régule ladite consigne de dérivée de régime moteur ($d\omega_{mot\,cons}$) comprenant les phases suivantes :

   - on calcule le couple moteur de référence ($C_{th\,ref}$) à appliquer au moteur pour suivre la consigne de dérivée de régime moteur, en prenant en compte l'inertie du volant moteur et le couple résistant estimé,
   - à partir du couple moteur de référence ($C_{th\,ref}$), on calcule une référence de dérivée de régime moteur ($d\omega_{mot\,ref}$), et
   - on régule la mesure de dérivée du régime moteur à la consigne définie par ladite référence de dérivée de régime moteur.

2. Procédé selon la revendication 1, **caractérisé en ce que** ladite trajectoire est une trajectoire de type « exponentielle sécante » définie par l'équation suivante :

$$\frac{d\Delta\omega(t)}{dt} = \Delta\dot{\omega}(t) = -\frac{1}{\tau}\Delta\omega(t) - \text{signe}(\Delta\omega(t))\left|\Delta\dot{\omega}_1\right|$$

dans laquelle :

$$\Delta\omega(t) = \omega_{cible}(t) - \omega_{mot}(t)$$

et

$\omega_{mot}(t)$ est le régime de l'arbre moteur à l'instant t,

$\omega_{cible}(t)$ est le régime cible (consigne finale) à l'instant $t$,

$\tau$ est une constante de temps de la trajectoire, et

$\Delta\dot{\omega}_1$ est la pente de raccordement, c'est-à-dire l'objectif de dérivée de l'écart de régime à l'instant $t_1$ où le régime moteur rejoint sa consigne ($\Delta\omega(t_1)=0$).

3. Procédé .selon l'une quelconque des revendications 1 et 2, **caractérisé en ce que** la consigne de couple à commander au moteur ($C_{th}(t)$) résulte de la sommation d'un terme de couple moteur de référence et d'un terme dit de correction de couple moteur obtenu lorsqu'on régule la mesure de dérivée du régime moteur à la consigne définie par la référence de dérivée de régime moteur.

4. Dispositif de régulation du régime d'un moteur commandé en couple lorsque ce moteur doit être piloté en régime, pour la mise en oeuvre du procédé conforme à l'une quelconque des revendications 1 à 3, **caractérisé en ce qu'**il comporte un module de génération d'une consigne de dérivée du régime moteur (10), et une structure de régulation anticipée et asservie (20, 30) - ou système de contrôle « feedforward/feedback » - qui prend en compte les limitations en couple et en dynamique du moteur dès la régulation anticipée.

5. Dispositif selon la revendication 4, **caractérisé en ce que** ladite structure de régulation anticipée et asservie (20, 30) comporte un module de régulation anticipée (20) qui calcule une référence de dérivée de régime moteur ($d\omega_{mot\ cons}$) qui prend en compte la dynamique du moteur et un module de régulation asservie (30) qui régule la mesure de dérivée du régime moteur à la consigne définie par la référence de dérivée.

6. Dispositif selon la revendication 5, **caractérisé en ce que** la structure de régulation anticipée (20) comporte un filtre qui intègre un retard pur et un filtre du premier ordre, de façon à prendre en compte la dynamique du moteur.

7. Dispositif selon l'une quelconque des revendications 4 à 6, **caractérisé en ce qu'**il est prévu un système d'anti-saturation, intégré au module de régulation asservie, afin de gérer au mieux la saturation de la commande en couple.

**Patentansprüche**

1. Verfahren zur Drehzahlregulierung eines Motors, der drehmomentgesteuert ist, wenn dieser Motor drehzahlgesteuert werden muss, **dadurch gekennzeichnet, dass** man einen Abweichungssollwert der Motordrehzahl ($d\omega_{mot\ cons}$) erzeugt, indem man einen Referenzverlauf für die Abweichung des Unterschieds zwischen der Zieldrehzahl ($\omega_{cible}$) und der Motordrehzahl definiert, und man diesen Abweichungssollwert der Motordrehzahl ($d\omega_{mot\ cons}$) mittels eines Moduls zur vorweggenommenen Regulierung (20) und eines Moduls zur gesteuerten Regulierung (30) reguliert, indem man die Drehmoment- und Dynamikbegrenzungen des Motors schon bei der vorweggenommenen Regulierung berücksichtigt, wobei der Regulierungsschritt, durch den man den Motordrehzahl-Abweichungssollwert ($d\omega_{mot\ cons}$) reguliert, die folgenden Phasen umfasst:

- Berechnen des Referenzmotordrehmoments ($C_{th\ ref}$), das an den Motor anzuwenden ist, um dem Motordrehzahl-Abweichungssollwert zu folgen, indem die Trägheit des Schwungrads und das geschätzte Gegenmoment berücksichtigt werden,
- ausgehend von dem Referenzmotordrehmoment (Cth ref), Berechnen einer Motordrehzahl-Abweichungsreferenz ($d\omega_{mot\ ref}$), und
- Regulieren des Abweichungsmaßes der Motordrehzahl auf den Sollwert, der durch die Motordrehzahl-Abweichungsreferenz definiert ist.

2. Verfahren nach Anspruch 1, **dadurch gekennzeichnet, dass** der Verlauf ein Verlauf des Typs "exponentiell schneidend" ist, der durch die folgende Gleichung definiert ist:

$$\frac{d\Delta\omega(t)}{dt} = \Delta\omega(t) = -\frac{1}{\tau}\Delta\omega(t) - signe(d\Delta\omega(t))|\Delta\omega_1|$$

wobei:

$$\Delta\omega(t) = \omega_{cible}(t) - \omega_{mot}(t)$$

und

$\omega_{mot}(t)$ die Drehzahl der Antriebswelle im Augenblick $t$ ist,
$\omega_{cible}(t)$ die Zieldrehzahl (Endsollwert) im Augenblick $t$ ist,
$\tau$ eine Zeitkonstante des Verlaufs der Bahn ist und,
$\Delta\omega_1$ das Anschlussgefälle ist, das heißt das Abweichungsziel des Drehzahlunterschieds im Augenblick $t_1$, in dem die Motordrehzahl ihren Sollwert ($\Delta\omega(t_1)=0$) erreicht.

3. Verfahren nach einem der Ansprüche 1 und 2, **dadurch gekennzeichnet, dass** der dem Motor zu befehlende Drehmomentsollwert ($C_{th}(t)$) aus der Summierung eines Referenzmotordrehmomentglieds und eines sogenannten Motordrehmoment-Korrekturglieds resultiert, das erhalten wird, wenn man das Abweichungsmaß der Motordrehzahl auf den durch die Motordrehzahl-Abweichungsreferenz definierten Sollwert reguliert.

4. Vorrichtung zur Regulierung der Drehzahl eines drehmomentgesteuerten Motors, wenn dieser Motor drehzahlgesteuert werden muss, zum Umsetzen des Verfahrens nach einem der Ansprüche 1 bis 3, **dadurch gekennzeichnet, dass** sie ein Modul zum Erzeugen eines Abweichungssollwerts der Motordrehzahl (10) und eine Struktur zur vorweggenommenen und gesteuerten Regulierung (20, 30) oder "Feedforward-/Feedback"-System umfasst, das die Drehmoment- und Dynamikbegrenzungen des Motors schon bei der vorweggenommenen Regulierung berücksichtigt.

5. Vorrichtung nach Anspruch 4, **dadurch gekennzeichnet, dass** die Struktur zur vorweggenommenen und gesteuerten Regulierung (20, 30) ein Modul zur vorweggenommenen Regulierung (20) umfasst, das eine Motordrehzahl-Abweichungsreferenz ($\Delta\omega_{mot\,cons}$) berechnet, die die Dynamik des Motors berücksichtigt, und ein gesteuertes Regulierungsmodul (30), das das Abweichungsmaß der Motordrehzahl auf das durch die Abweichungsreferenz definierten Sollwert reguliert.

6. Vorrichtung nach Anspruch 5, **dadurch gekennzeichnet, dass** die Struktur zur vorweggenommenen Regulierung (20) ein Filter umfasst, das eine reine Verzögerung integriert, und ein Filter ersten Rangs derart umfasst, dass die Dynamik des Motors berücksichtigt wird.

7. Vorrichtung nach einem der Ansprüche 4 bis 6, **dadurch gekennzeichnet, dass** ein Sättigungsschutzsystem, das in das gesteuerte Regulierungsmodul integriert ist, vorgesehen ist, um die Sättigung der Drehmomentsteuerung bestens zu verwalten.

## Claims

1. A method for controlling the speed of an engine with a torque control when this engine must be speed-controlled, **characterised in that** the setpoint derivative of the engine speed ($d\omega_{mot\,cons}$) is generated by defining a reference trajectory for the derivative of the difference between the target speed ($\omega_{cible}$) and the engine speed, and this derivative setpoint of the engine speed ($d\omega_{mot\,cons}$) is controlled by means of a feedforward control module (20) and a feedback control module (30) taking account of the torque and dynamic limitations of the engine from the feedforward control, the control stage by which said derivative setpoint of the engine speed ($d\omega_{mot\,cons}$) is controlled comprising the following phases:

- the reference engine torque ($C_{th\,ref}$) to be applied to the engine to follow the derivative setpoint of the engine speed is calculated, taking account of the inertia of the flywheel and the estimated resistant torque,
- on the basis of the reference engine torque ($C_{th\,ref}$), an engine speed derivative reference ($d\omega_{mot\,cons}$) is

calculated, and

- the derivative measure of the engine speed is controlled at the setpoint defined by said engine speed derivative reference.

2. The method according to claim 1, **characterised in that** said trajectory is a trajectory of the "secant exponential" type defined by the following equation:

$$\frac{d\Delta\omega(t)}{dt} = \Delta\omega(t) = -\frac{1}{\tau}\Delta\omega(t) - signe(d\Delta\omega(t))\left|\Delta\omega_1\right|$$

wherein:

$\Delta\omega(t) = \omega_{cible}(t) - \omega_{mot}(t)$ and
$\omega_{mot}(t)$ is the speed of the engine shaft at instant $t$,
$\omega_{cible}(t)$ is the target speed (final setpoint) at instant $t$,
$\tau$ is a time constant of the trajectory, and
$\Delta\omega_1$ is the connection gradient, i.e. the derivative objective of the speed difference at instant $t_i$ where the engine speed joins its setpoint ($\Delta\omega (t_1)= 0$).

3. The method according to any one of claims 1 and 2, **characterised in that** the torque setpoint to control the engine ($C_{th}(t)$) results from the sum of a reference engine torque term and a so-called correction engine torque term obtained when the derivative measure of the engine speed is controlled at the setpoint defined by the engine speed derivative reference.

4. A device for controlling the speed of an engine with a torque control when this engine must be speed-controlled, for the implementation of the method according to any one of claims 1 to 3, **characterised in that** it comprises a module for generating a derivative setpoint of the engine speed (10), and a feedforward and feedback control structure (20, 30) - or "feedforward /feedback" control system - which takes account of the torque and dynamic limitations of the engine from the feedforward control.

5. The device according to claim 4, **characterised in that** said feedforward and feedback control structure (20, 30) comprises a feedforward control module (20) which calculates an engine speed derivative reference ($d\omega_{mot\ cons}$) which takes account of the dynamics of the engine and a feedback control module (30) which controls the derivative measure of the engine speed at the setpoint defined by the derivative reference.

6. The device according to claim 5, **characterised in that** the feedforward control structure (20) comprises a filter which integrates a pure delay and a first order filter, in such a way as to take account of the dynamics of the engine.

7. The device according to any one of claims 4 to 6, **characterised in that** an anti-saturation system, integrated into the feedback control module, is provided in order best to manage the saturation of the torque control.

Fig. 1

Fig. 2

Fig. 3

Fig. 4

Fig. 5

_Fig. 6_

_Fig. 7_

Fig. 8

Fig. 9

Fig. 10

**EP 1 985 828 B1**